# EUROPEAN PATENT APPLICATION

(11) **EP 2 339 447 A2**
(43) Date of publication of application: **29.06.2011**
(21) Application number: 10174723.6
(22) Date of filing: 31.08.2010
(51) Int. Cl.: G06F 3/06

(54) **Method and apparatus for I/O path switching**

(30) Priority: 23.12.2009 US 646397
(71) Applicant: Hitachi Ltd., Tokyo (JP)
(72) Inventor: Otani, Toshio, Chiyoda-ku Tokyo (JP); Kawaguchi, Tomohiro, Chiyoda-ku Tokyo (JP)
(74) Representative: Moore, Graeme Patrick

(57) **Abstract**

A system for input/output path switching comprises a host; a network switch coupled to the host; and a plurality of storage systems which include a first storage system and a second storage system. For switching an I/O path, from a path between the host and the first storage system via the network switch to another path between the host and the second storage system via the network switch, one of the host or the network switch changes FCID (Fibre Channel Node port identifier) information therein, to migrate a WWPN (World Wide Port Name) from association with the first storage system network interface to association with the second storage system network interface. The FCID information includes address information of storage system network interfaces of the storage systems for connecting to the network switch.

## Description

### BACKGROUND OF THE INVENTION

The present invention relates generally to storage systems and, more particularly, to I/O path switching in a storage area network (SAN) using Fibre Channel (FC) and Fibre Channel over Ethernet (FCoE).

It is known to let the storage subsystem set the virtual WWPN (World Wide Port Name) which was owned by the old storage subsystem for storage subsystem replacement when migration occurs. The problem to be solved by the present invention is that switching FC/FCoE I/O path between the host and the storage subsystem during migration from the physical port of the old storage subsystem to the physical port of the new storage subsystem requires I/O suspension.

### BRIEF SUMMARY OF THE INVENTION

Exemplary embodiments of the invention provide methods and apparatus for non-disruptive I/O path switching between the host and the storage subsystem during migration from the physical port of the old (source) storage subsystem to the physical port of the new (target or destination) storage subsystem. In specific embodiments, the new storage subsystem sets the WWPN for its port which was owned by the old storage subsystem. After WWPN registration, the FC/FCoE switch changes its switching table to switch the FC/FCoE frame from the physical port of the old storage subsystem to the physical port of the new storage subsystem. The new storage subsystem disables cache memory during path switching. If the FC/FCoE frames cannot be used to compose the Sequence (SCSI command), it waits for SCSI retransmission by the host.

In accordance with an aspect of the present invention, a system for input/output (I/O) path switching comprises a host; a network switch coupled to the host, the network switch having a processor, a memory, and network switch interfaces; and a plurality of storage systems which include a first storage system and a second storage system; the first storage system having a first storage system network interface coupled to the network switch, and one or more first storage volumes; the second storage system having a second storage system network interface coupled to the network switch, and one or more second storage volumes. For switching an I/O path, from a path between the host and the first storage system via the network switch to another path between the host and the second storage system via the network switch, one of the host or the network switch changes FCID (Fibre Channel Node port identifier) information therein, to migrate a WWPN (World Wide Port Name) from association with the first storage system network interface to association with the second storage system network interface. The FCID information includes address information of storage system network interfaces of the storage systems for connecting to the network switch.

In some embodiments, during the I/O path switching, one or more I/O operations associated with one or more I/O commands from the host are performed within the system. The system further comprises a management computer coupled to the host, the network switch, and the storage systems. In response to a command from the management computer to the network switch, a physical network interface identifier is changed for a FCID associated with the I/O path switching to the second storage system based on the change of the FCID information.

In specific embodiments, the system further comprises a management computer coupled to the host, the network switch, and the storage systems. Based on the change of the FCID information, the second storage system sends a command to the network switch to update I/O path switching information and the network switch sends a notice to the management computer regarding the update to the I/O path switching information.

In accordance with another aspect of the invention, a system for input/output (I/O) path switching comprises a host; a network switch coupled to the host, the network switch having a processor, a memory, and network switch interfaces; and a plurality of ports which include a first port and a second port; the first port coupled to a plurality of first storage volumes via a first controller and having a first network interface coupled to the network switch; the second port coupled to a plurality of second storage volumes via a second controller and having a second network interface coupled to the network switch. The network switch, in response to a command authorizing the I/O path switching from a path between the host and the first port to another path between the host and the second port, changes FCID (Fibre Channel Node port identifier) information therein, to migrate a WWPN (World Wide Port Name) from association with the first network interface to association with the second network interface, a subsequent frame not sent to the first port to be sent to the second port after the change of FCID. The FCID information includes address information of network interfaces of the first and second ports for connecting to the network switch.

In some embodiments, the system further comprises a management computer coupled to the host, the network switch, and the first and second controllers. The command is issued by the management computer. The management computer sends a notice to the first and second controllers when the command is issued. In response to the notice sent from the management computer, the second storage system turns on a cache memory which was off before the network switch changes FCID. The network switch, under control of the command, changes the transfer processing unit from frame to sequence, the network switch checks if all frames within a sequence are received or not, and, if all frames within the sequence are not received, the network switch waits until all frames within the sequence are received before changing the transfer processing unit from frame to sequence. The management computer sends the notice to the first and second storage systems after the transfer processing unit is changed from frame to sequence.

In specific embodiments, the first port, the first controller, and first storage volumes are included in a first storage system. The second port, the second controller, and second storage volumes are included in a second storage system different from the first storage system.

In accordance with another aspect of the invention, a system for input/output (I/O) path switching comprises a host; a network switch coupled to the host, the network switch having a processor, a memory, and network switch interfaces; and a plurality of storage systems which include a first storage system and a second storage system; the first storage system having a first storage system network interface coupled to the network switch, and one or more first storage volumes; the second storage system having a second storage system network interface coupled to the network switch, and one or more second storage volumes. The network switch, in response to a command authorizing the I/O path switching from a path between the host and the first storage system to another path between the host and the second storage system, changes FCID (Fibre Channel Node port identifier) information therein, to migrate a WWPN (World Wide Port Name) from association with the first network interface to association with the second network interface, a subsequent sequence not sent to the first storage system to be sent to the second storage system after the change of FCID. The FCID information includes address information of storage system network interfaces of the first and second storage systems for connecting to the network switch. A sequence represents a single SCSI command and a sequence has one or more frames.

In some embodiments, the system further comprises a management computer coupled to the host, the network switch, and the storage systems. The command is issued by the management computer. The management computer sends a notice to the first and second storage systems when the command is issued. In response to the notice sent from the management computer, the second storage system turns on a cache memory therein.

These and other features and advantages of the present invention will become apparent to those of ordinary skill in the art in view of the following detailed description of the specific embodiments.

### BRIEF DESCRIPTION OF THE DRAWINGS

FIG. 1 illustrates an example of a hardware configuration of a storage area network using Fibre Channel in which the method and apparatus of the invention may be applied.

FIG. 2 shows an example of the configuration of the host.

FIG. 3 shows an example of the configuration of the SAN switch.

FIG. 4 shows an example of the configuration of the storage subsystem.

FIGS. 5a-5e show examples of system configuration for several methods to switch the FC frame path from the physical port of the old storage subsystem to the physical port of the new storage subsystem.

FIG. 6a shows an example of a flow diagram of the non-disruptive switching method done by the SAN switch.

FIG. 6b shows an example of a flow diagram of the non-disruptive switching method done by the host.

FIG. 7 shows an example of the warning message sent to the administrator who will determine whether to allow FC frame switching or not.

FIG. 8 shows an example of Fibre Channel frame format.

FIG. 9 illustrates an example of a hardware configuration of a storage area network using Fibre Channel over Ethernet (FCoE) in which the method and apparatus of the invention may be applied.

FIG. 10 shows an example of the configuration of the FCoE switch.

FIGS. 11a-11f show examples of system configuration for several methods to switch the FCoE frame path from the physical port of the old storage subsystem to the physical port of the new storage subsystem.

FIG. 12a shows an example of a flow diagram of the non-disruptive switching method done by the FCoE switch.

FIG. 12b shows an example of a flow diagram of the non-disruptive switching method done by the host.

FIG. 13 shows an example of the warning message sent to the administrator who will determine whether to allow FCoE frame switching or not.

FIG. 14 shows an example of Fibre Channel over Ethernet frame format.

FIG. 15 shows the structure of FC/FCoE Frame and SCSI command.

FIG. 16a shows an example of Sequence/Exchange based switching.

FIG. 16b shows an example of FC/FCoE frame switching.

FIG. 17 shows an example of a flow diagram illustrating Sequence/Exchange based switching.

FIG. 18 shows an example of a system configuration for non-disruptive switching in multi-pathing environment.

FIG. 19 shows an example of a system configuration for non-disruptive switching in an inter-switching environment.

### DETAILED DESCRIPTION OF THE INVENTION

In the following detailed description of the invention, reference is made to the accompanying drawings which form a part of the disclosure, and in which are shown by way of illustration, and not of limitation, exemplary embodiments by which the invention may be practiced. In the drawings, like numerals describe substantially similar components throughout the several views. Further, it should be noted that while the detailed description provides various exemplary embodiments, as described below and as illustrated in the drawings, the present invention is not limited to the embodiments described and illustrated herein, but can extend to other embodiments, as would be known or as would become known to those skilled in the art. Reference in the specification to "one embodiment," "this embodiment," or "these embodiments" means that a particular feature, structure, or characteristic described in connection with the embodiment is included in at least one embodiment of the invention, and the appearances of these phrases in various places in the specification are not necessarily all referring to the same embodiment. Additionally, in the following detailed description, numerous specific details are set forth in order to provide a thorough understanding of the present invention. However, it will be apparent to one of ordinary skill in the art that these specific details may not all be needed to practice the present invention. In other circumstances, well-known structures, materials, circuits, processes and interfaces have not been described in detail, and/or may be illustrated in block diagram form, so as to not unnecessarily obscure the present invention.

Furthermore, some portions of the detailed description that follow are presented in terms of algorithms and symbolic representations of operations within a computer. These algorithmic descriptions and symbolic representations are the means used by those skilled in the data processing arts to most effectively convey the essence of their innovations to others skilled in the art. An algorithm is a series of defined steps leading to a desired end state or result. In the present invention, the steps carried out require physical manipulations of tangible quantities for achieving a tangible result. Usually, though not necessarily, these quantities take the form of electrical or magnetic signals or instructions capable of being stored, transferred, combined, compared, and otherwise manipulated. It has proven convenient at times, principally for reasons of common usage, to refer to these signals as bits, values, elements, symbols, characters, terms, numbers, instructions, or the like. It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

The present invention also relates to an apparatus for performing the operations herein. This apparatus may be specially constructed for the required purposes, or it may include one or more general-purpose computers selectively activated or reconfigured by one or more computer programs. Such computer programs may be stored in a computer-readable storage medium, such as, but not limited to optical disks, magnetic disks, read-only memories, random access memories, solid state devices and drives, or any other types of media suitable for storing electronic information. The algorithms and displays presented herein are not inherently related to any particular computer or other apparatus. Various general-purpose systems may be used with programs and modules in accordance with the teachings herein, or it may prove convenient to construct a more specialized apparatus to perform desired method steps. In addition, the present invention is not described with reference to any particular programming language. It will be appreciated that a variety of programming languages may be used to implement the teachings of the invention as described herein. The instructions of the programming language(s) may be executed by one or more processing devices, e.g., central processing units (CPUs), processors, or controllers.

Exemplary embodiments of the invention, as will be described in greater detail below, provide apparatuses, methods and computer programs for non-disruptive I/O path switching in a storage area network using Fibre Channel (FC) and Fibre Channel over Ethernet (FCoE). In specific embodiments, this invention is used to perform non-disruptive FC/FCoE path switching from the physical port of the old storage subsystem to the physical port of the new storage subsystem by using the same WWN for FC/FCoE path configuration.

1. Fibre Channel

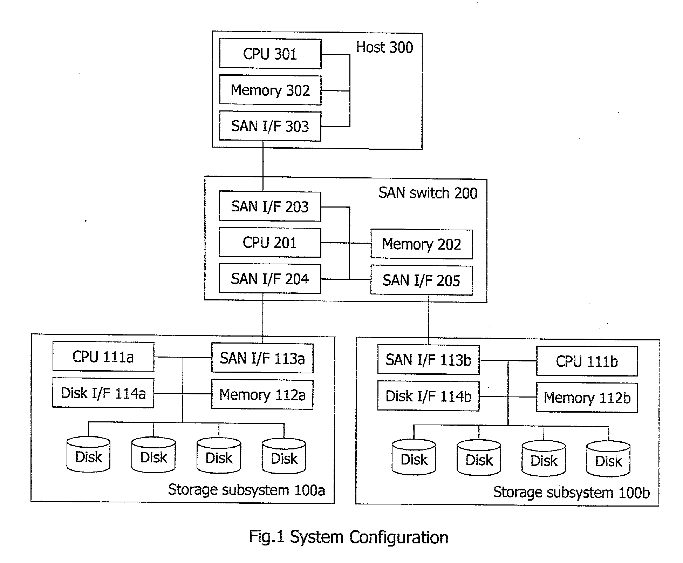

FIG. 1 illustrates an example of a hardware configuration of a storage area network using Fibre Channel in which the method and apparatus of the invention may be applied. The system includes a host computer 300, a SAN switch 200, and storage subsystems 100a and 100b. The host 300 includes a CPU 301, a memory 302, and a SAN I/F (interface) 303. The SAN switch 200 includes a CPU 201, a memory 202, and SAN interfaces 203, 204, and 205. Each storage subsystem 100 includes a CPU 111, a memory 112, a SAN I/F 113, and a disk I/F 114. The host 300 sees a logical volume which is provide by the storage subsystems 100 via the SAN switch 200. This can be done using the Fibre Channel Protocol. In one example, migration will occur from a source storage subsystem 100a to a target storage subsystem 100b. After migration, the host 300 sees the logical volume in the target storage subsystem 100b.

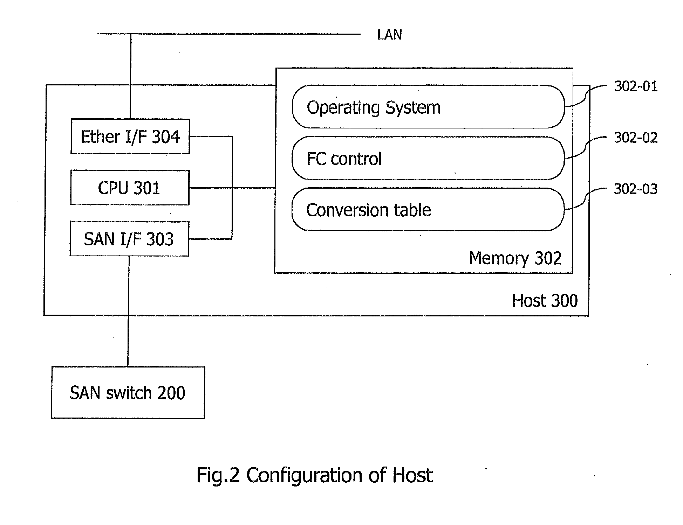

FIG. 2 shows an example of the configuration of the host 300. The host 300 includes the CPU 301, the memory 302, an Ethernet I/F 304, and the SAN I/F 303 to connect with the SAN switch 200. The CPU 301 runs application programs such as the operating system 302-01 and FC control 302-02. The memory 302 also stores a conversion table 302-03.

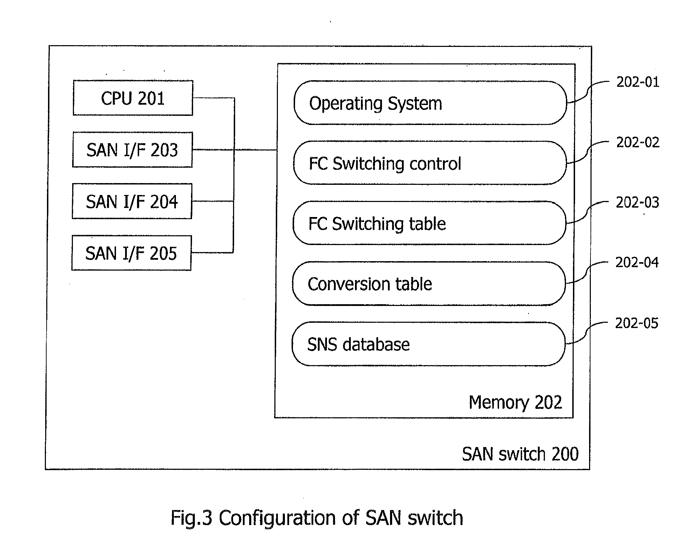

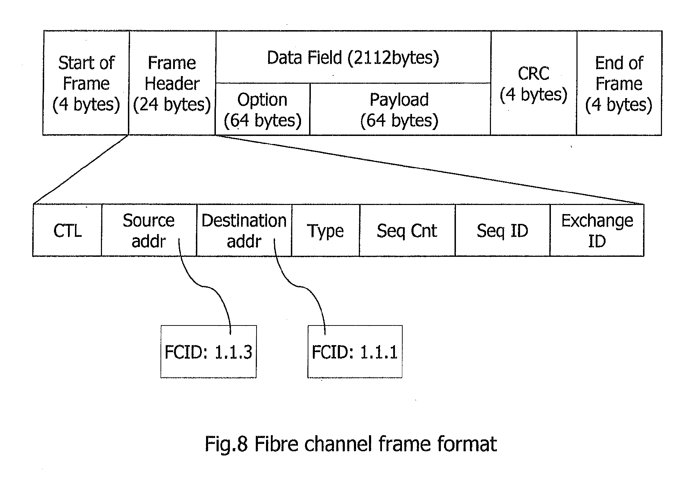

FIG. 3 shows an example of the configuration of the SAN switch 200. The SAN switch 200 includes the CPU 201, the memory 202, and the SAN interfaces 203-205 to connect with the host and storage subsystems. The CPU 201 runs application programs such as the operating system 202-01, FC switching control 202-02, and so on. The memory 202 further stores an FC switching table 202-03, a conversion table 202-04, and an SNS database 202-05. The FC switching control 202-02 allows the FC frame to forward from one SAN I/F to another SAN I/F according to the source address and the destination address (N_Port ID, a.k.a. FCID) on the FC frame as shown in FIG. 8 (illustrating an example of Fibre Channel frame format), for instance.

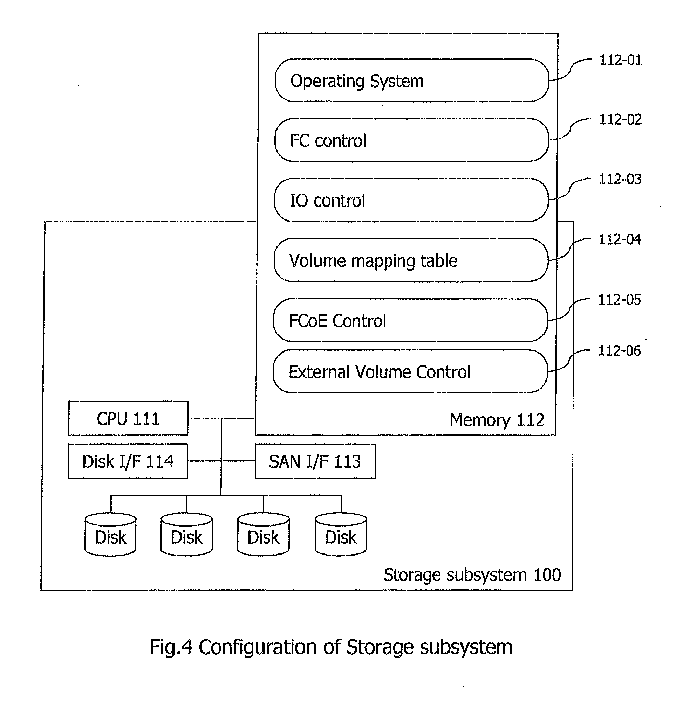

FIG. 4 shows an example of the configuration of the storage subsystem 100. The storage subsystem 100 includes the CPU 111, the memory 112, the SAN I/F 113, and the Disk I/F 114. The CPU 111 runs application programs such as the operating system 112-01, FC control 112-02, IO control 112-03, FCoE control 112-05, external volume control 112-06, and so on. The FC control 112-02 allows the storage subsystem 100 to send and receive FC frame to/from the host 300 via the SAN switch 200. The SAN I/F 113 has an address called FCID (N_Port ID) which was given by the SAN switch 200 when connecting to the SAN switch (FLOGI or Fabric Login). The IO control 112-03 allows the storage subsystem 100 to show the logical volume (LU) which includes one or more disks connected to the Disk I/F 114.

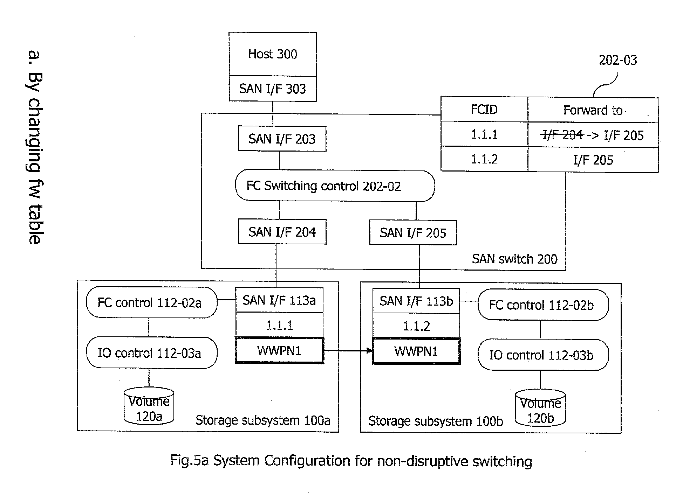

FIGS. 5a-5e show examples of system configuration for several methods to switch the FC frame path from the physical port of the old storage subsystem to the physical port of the new storage subsystem. Basically, the host 300 and the storage subsystem 100a connect with each other as described below.

(1) The host 300 (operating system, file system) issues a storage IO command to its SCSI layer.

(2) The SCSI layer composes a SCSI command (read or write), and sends it to the SAN I/F 303.

(3) The SAN I/F 303 composes one of more FC frames to send a SCSI command to the source storage subsystem 100a.

(4) The SAN switch 200 receives the FC frames from the host 300, forwards these FC frames to the proper SAN I/F to send them toward the target storage subsystem 100b by the FC switching control 202-02. When the host 300 and/or storage subsystem(s) 100 (hereinafter FC node) connect to the SAN switch 200, the FLOGI process happens to provide the FCID to each node (1.1.1, 1.1.2). The FCID is a fixed address to identify the physical SAN I/F. When the FLOGI process happened, the SAN switch 200 can identify which node is connected to which SAN I/F. For instance, when the FLOGI message comes from the SAN I/F 204 connected to the SAN I/F 113a on the source storage subsystem 100a, the FC Frame to FCID 1.1.1 given for the SAN I/F 113a should forward to the SAN I/F 204. This forwarding table is managed by the FC switching table 202-03. After FLOGI, each node will do PLOGI (Port Login) to the SAN switch 200 to register parameters of themselves to the SNS database 202-05. The SNS database lets each node know the parameter of each other node (e.g., node type such as initiator/target, node ID such as WWN (World Wide Name) and so on).

(5) The SAN I/F 113b of the target storage subsystem 100b (FC control 112-02) receives the FC frames. After getting all FC frames which can re-compose a SCSI command, the SAN I/F 113b sends the SCSI command message to the IO control 112-03.

(6) The IO control 112-03 processes the SCSI command to each volume.

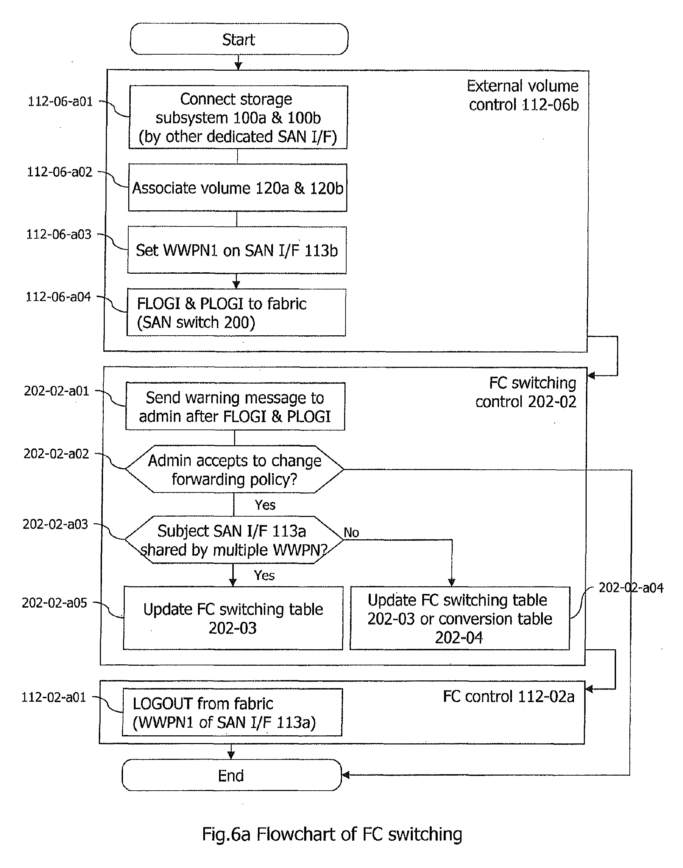

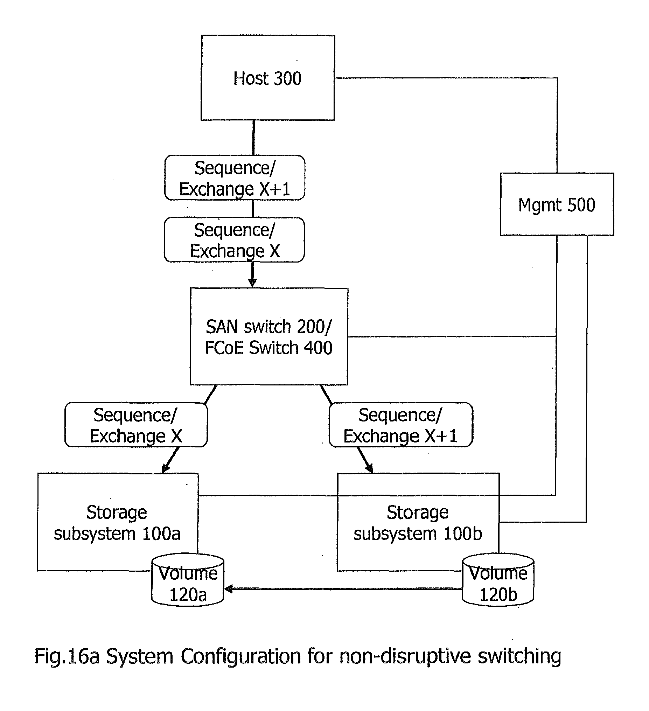

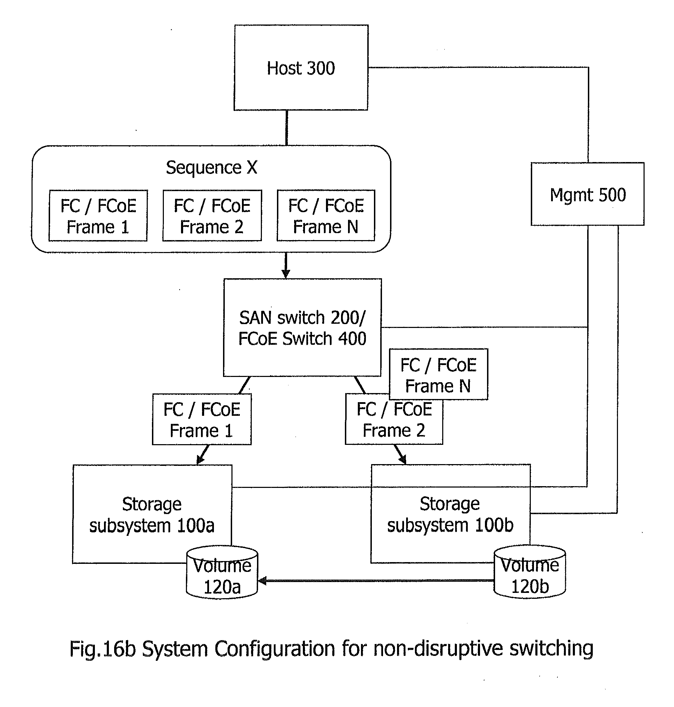

FIGS. 5a-5c show examples of non-disruptive path switching method done by the SAN switch 200. FIG. 6a shows an example of a flow diagram of the non-disruptive switching method done by the SAN switch 200. The external volume control 112-06b of the target storage subsystem 100b connects the storage subsystems 100a and 100b (by other dedicated SAN I/F) in step 112-06-a01, associates the volumes 120a and 120b in step 112-06-a02, sets the WWPN1 on the SAN I/F 113b in step 112-06-a03, and performs FLOGI and PLOGI to the fabric (SAN switch 200) in step 112-06-a04. The FC switching control 202-02 of the SAN switch 200 sends a warning message to the administrator (see, e.g., management computer 500 in FIG. 16) after FLOGI and PLOGI in step 202-02-a01. If the administrator does not accept to change the forwarding policy in step 202-02-a02, the process ends. If the administrator accepts to change the forwarding policy, the program determines if the subject SAN I/F 113a is shared by multiple WWPN in step 202-02-a03. If yes, the program updates the FC switching table 202-03 in step 202-02-a05. If no, the program updates the FC switch table 202-03 or the conversion table 202-04 in step 202-02-a04. In step 112-02-a01, the FC control 112-02a of the source storage subsystem 100a performs LOGOUT from the fabric (WWPN1 of SAN I/F 113a).

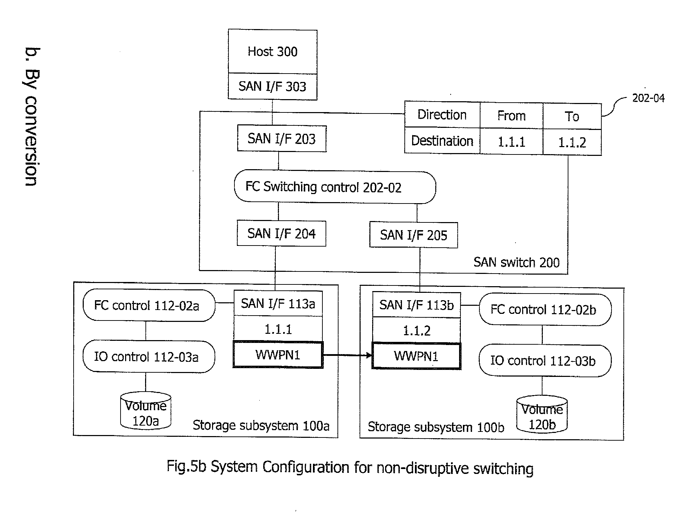

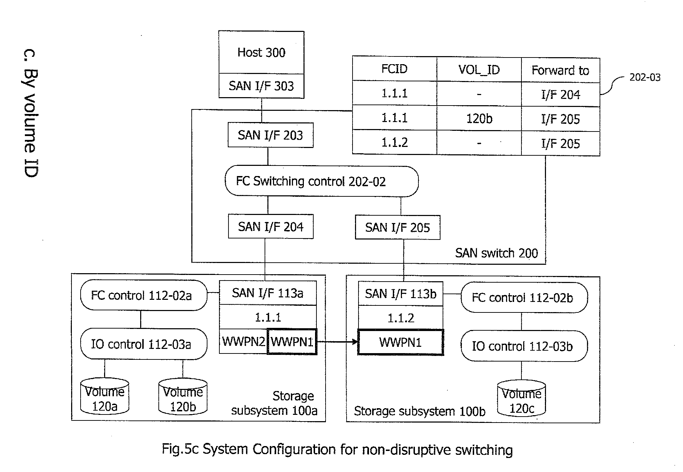

FIG. 5a shows the example of changing the FC switching table 202-03 to switch. Before switching, the FC frame to "1.1.1" is forwarded to the SAN I/F 204 to reach the SAN I/F 113a which owns FCID "1.1.1 ". Thus, changing the "Forward to" column of FCID "1.1.1" to "SAN I/F 205" in the FC switching table 202-03 allows the FC switching control 202-02 to forward the FC frame going "1.1.1" toward the SAN I/F 113b. FIG. 5b shows another example of changing the FC frame destination address from "1.1.1" to "1.1.2" by referring to the conversion table 202-04. FIG. 5c shows another example of switching the FC frame by FCID and VOL_ID (volume identification information can be embedded in the FC frame option field, for instance).

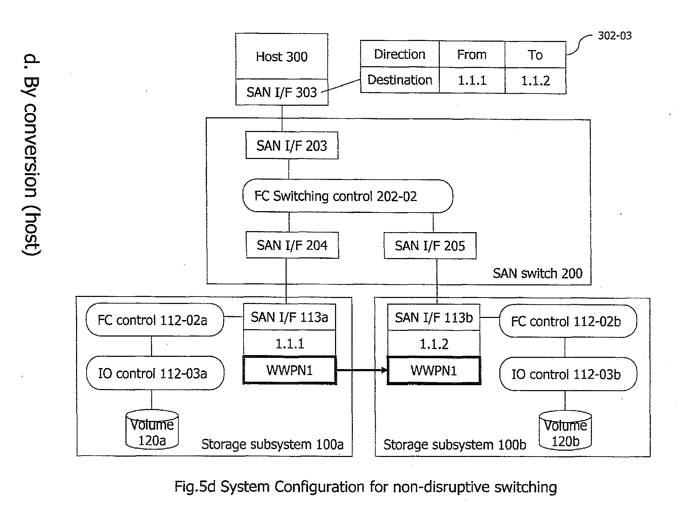

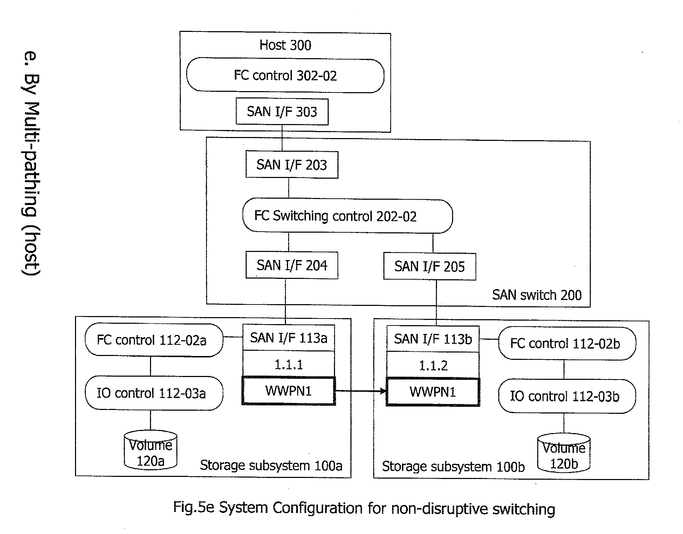

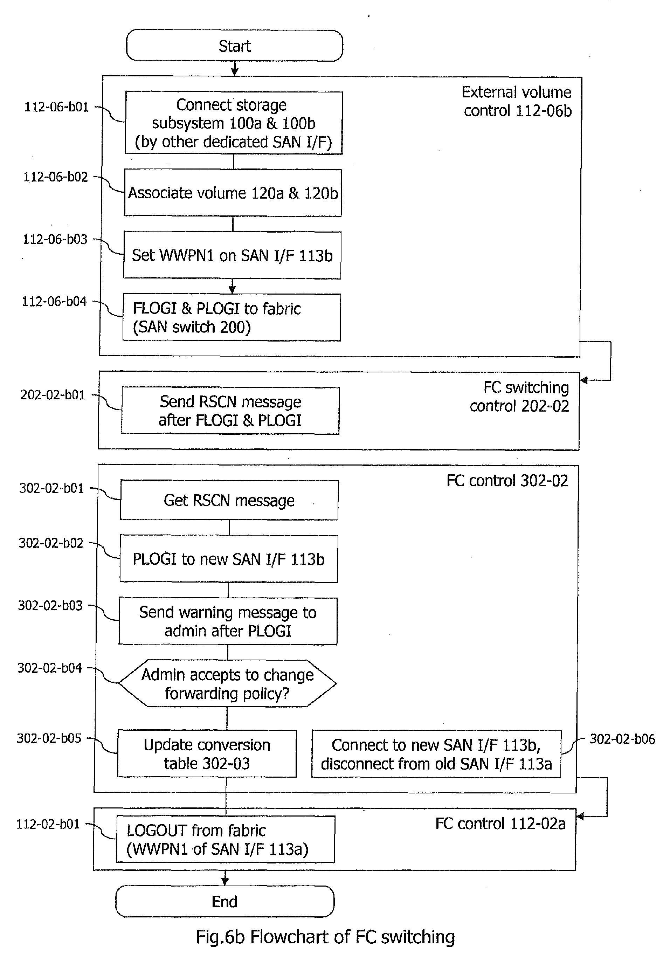

FIGS. 5d and 5e show examples of non-disruptive path switching method done by the host 300. FIG. 6b shows an example of a flow diagram of the non-disruptive switching method done by the host 300. The external volume control 112-06b of the target storage subsystem 100b connects the storage subsystems 100a and 100b (by other dedicated SAN I/F) in step 112-06-a01, associates the volumes 120a and 120b in step 112-06-a02, sets the WWPN1 on the SAN I/F 113b in step 112-06-a03, and performs FLOGI and PLOGI to the fabric (SAN switch 200) in step 112-06-a04. The FC switching control 202-02 of the SAN switch 200 sends an RSCN (Registered State Change Notification) message after FLOGI and PLOGI in step 202-02-b01. The FC control 302-02 of the host 300 gets the RSCN message in step 302-02-b01, performs PLOGI to the new SAN I/F 113b in step 302-02-b02, and sends a warning message to the administrator after PLOGI in step 302-02-b03. If the administrator accepts to change the forwarding policy in step 302-02-b04, the program updates the conversion table 302-03 in step 302-02-b05. If the administrator does not accept to change the forwarding policy, the program connects to the new SAN I/F 113b and disconnects from the old SAN I/F 113a in step 302-02-b06. In step 112-02-b01, the FC control 112-02a of the source storage subsystem 100a performs LOGOUT from the fabric (WWPN1 of SAN I/F 113a).

The method of FIG. 5d is similar to that of FIG. 5b. The host 300 has the conversion table 302-03 to change the FC frame destination address from "1.1.1" to "1.1.2." FIG. 5e shows another method by utilizing multi-pathing software. The FC control 302-02 connects not only volume 120a but also volume 120b by using the same WWPN, but different FCID. Enrolling new WWPN lets the SAN switch 200 send an RSCN message to every node within the same zone including the host 300, and it allows the host 300 know that the topology change happened. After getting the RSCN, the FC control 302-02 changes the FC frame destination from volume 120a (source) to volume 120b (target) by connecting to the target SAN I/F 113b and volume 120b and disconnecting from the source SAN I/F 113a and volume 120a.

Before changing the FC forwarding database, the target storage subsystem 100b needs to connect to the source storage subsystem 100a to virtualize volume 120a on storage subsystem 100a as volume 120b on storage subsystem 100b (volume 120b represents volume 120a, host 300 sends SCSI command to volume 120b, it will be reflected to volume 120a by External volume control 112-06 (e.g., Hitachi Universal Volume Manager)).

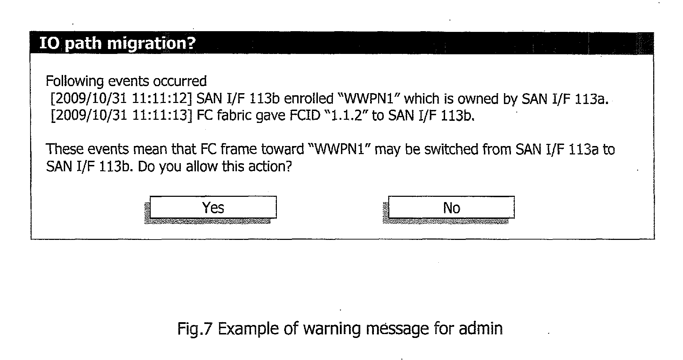

For security reasons, it allows the administrator to determine whether FC frame switching will be allowed or not. Enrolling the same WWPN by SAN I/F 113b lets the system know that FC frame switching may occur from SAN I/F 113a to SAN I/F 113b. At this time, the SAN switch 200 shows the warning message to the administrator as seen in FIG. 7. If the administrator says yes, the FC frame switching process will proceed.

2. Fibre Channel over Ethernet (FCoE)

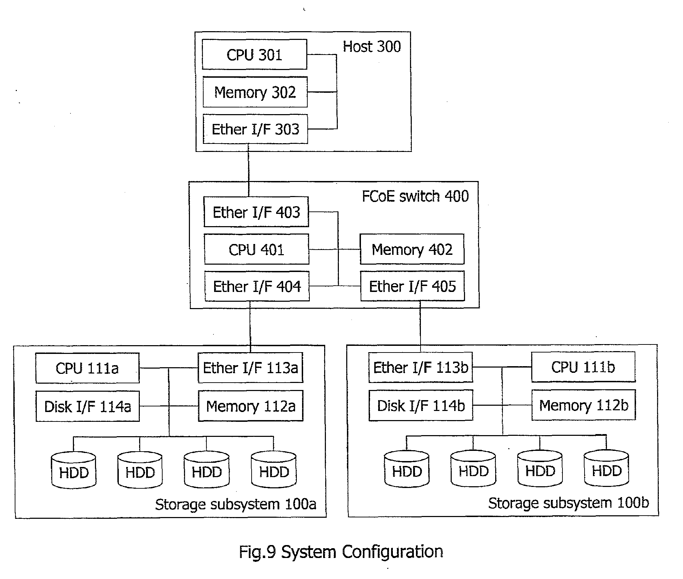

FIG. 9 illustrates an example of a hardware configuration of a storage area network using Fibre Channel over Ethernet (FCoE) in which the method and apparatus of the invention may be applied. It includes a host computer 300, an FCoE switch 400, and storage subsystems 100a and 100b. The host 300 has a CPU 301, a memory 302, and an Ether I/F 303. The FCoE switch 400 has a CPU 401, a memory 402, and Ether I/F 403, 404, and 405. The storage subsystem 100 has a CPU 111, a memory 112, an Ether I/F 113, and a Disk I/F 114. The host 300 sees the logical volume which is provide by the storage subsystem 100 via the SAN switch 200. It can be done by FCoE Protocol. Migration will occur from the source storage subsystem 100a to the target storage subsystem 100b. After migration, the host 300 sees the logical volume in the target storage subsystem 100b. In this case, the host 300 and the storage subsystems 100a and 100b have Ether I/F instead of SAN I/F to connect to Ethernet switch (FCoE switch 400).

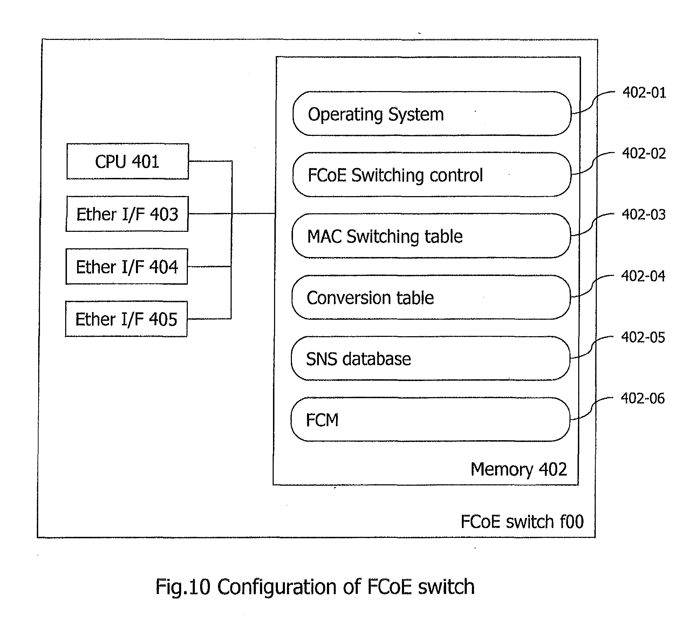

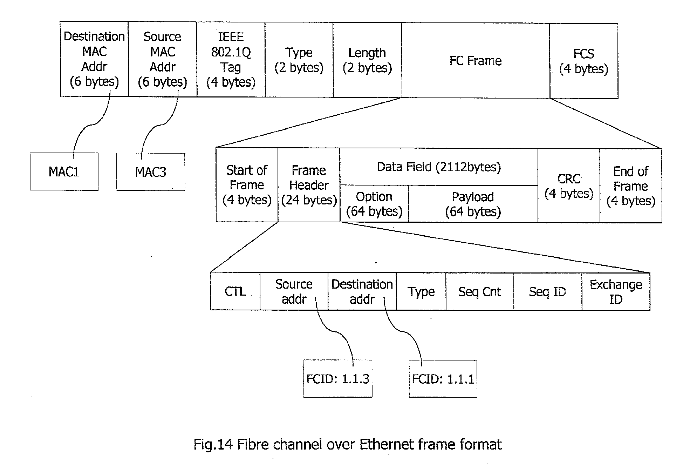

FIG. 10 shows an example of the configuration of the FCoE switch 400. The FCoE switch 400 includes the CPU 401, the memory 402, the Ether I/F 403, 404, 405 to connect with the host 300 and the storage subsystems 100. The CPU 401 runs application programs such as the operating system 402-01, FCoE switching control 402-02, and so on. The memory 402 further stores a conversion table 402-04, an SNS database 402-05, and an FCM (FCoE Mapper) 402-06. The FCoE switching control 402-02 allows the FCoE frame to forward from the Ether I/F to another Ether I/F according to the source address and the destination address (MAC address) on the FCoE frame as shown in FIG. 14 (illustrating an example of Fibre Channel over Ethernet frame format), for instance.

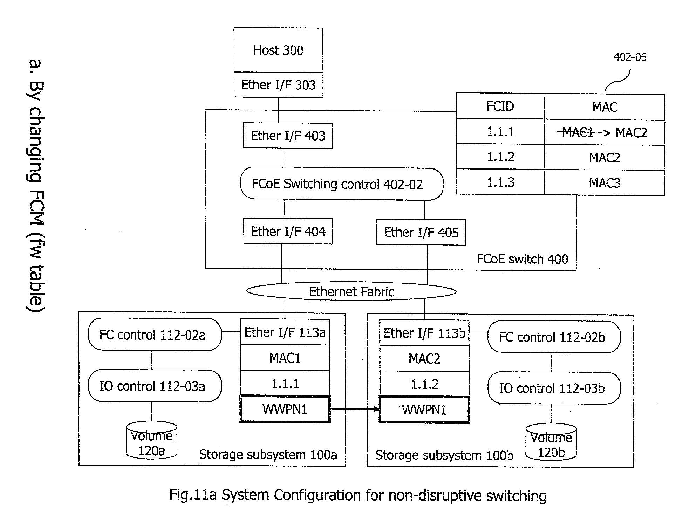

FIGS. 11a-11f show examples of system configuration for several methods to switch the FCoE frame path from the physical port of the old storage subsystem to the physical port of the new storage subsystem. Basically, the host 300 and the source storage subsystem 100a connect to each other as described below.

(1) The host 300 (operating system, file system) issues a storage IO command to its SCSI layer.

(2) The SCSI layer composes a SCSI command (read or write) and sends it to the Ether I/F 303.

(3) The Ether I/F 303 composes one of more FCoE frames to send the SCSI command to the source storage subsystem 100a.

(4) The FCoE switch 400 receives the FCoE frames from the host 300, forwards these FCoE frames to the proper Ether I/F to send them toward the target storage subsystem 100b by the FCoE switching control 402-02. When the host 300 and/or storage subsystem(s) 100 (hereinafter FCoE node) connect to the FCoE switch 400, FLOGI process happens to provide FCID to each node (1.1.1, 1.1.2). The FCID is a fixed address to identify the physical SAN I/F. When FLOGI happened, the FCoE switch can identify which node is connected to which Ether I/F by using the MAC address that each node has. For instance, when the FLOGI message comes from the Ether I/F 404 connected to the Ether I/F 113a on the source storage subsystem 100a, the FCoE Frame to FCID "1.1.1" / MAC address "MAC1" given for Ether I/F 113a should forward to the Ether I/F 404. This forwarding table is managed by the MAC switching table 402-03. The mapping between the MAC address and the FCID is managed by the FCM (FCoE Mapper) 402-06. After FLOGI, each node will do PLOGI to FCoE switch 400 to register parameters of themselves to the SNS database 402-05. The SNS database 402-05 lets each node know the parameter of each other node (e.g., node type such as initiator/target, node ID such as WWN (World Wide Name), and so on). Sometimes, another dedicated MAC address for FCoE connection will be given to the Ether I/F of each node at this point.

(5) The Ether I/F 113b of the target storage subsystem 100b (FCoE control 112-02) receives the FCoE frames. After getting all the FCoE frames which can re-compose the SCSI command, the Ether I/F 113b sends the SCSI command message to the IO control.

(6) The IO control processes the SCSI command to each volume.

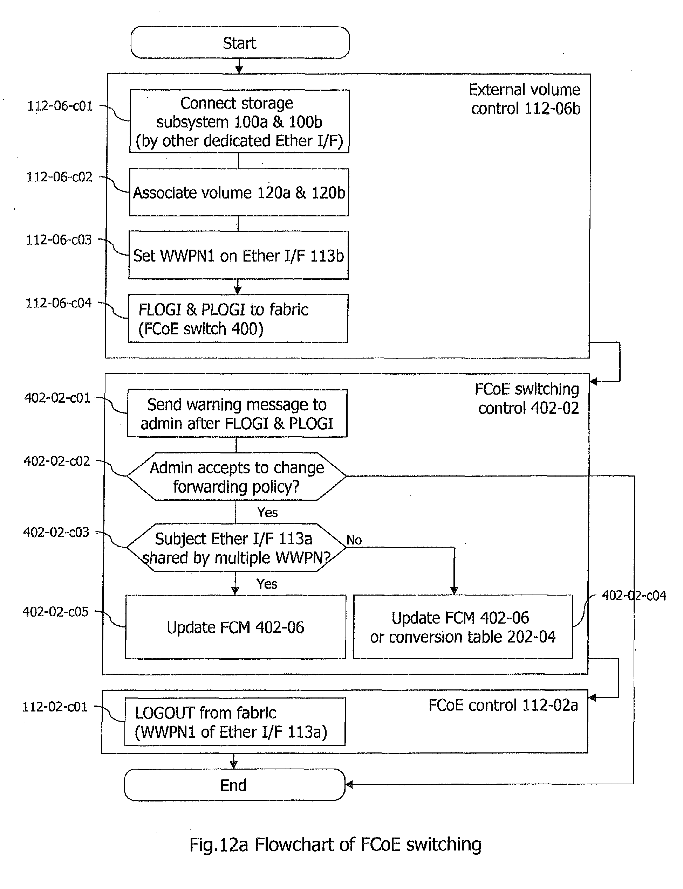

FIGS. 11a -11d show non-disruptive path switching examples by the FCoE switch 400. FIG. 12a shows an example of a flow diagram of the non-disruptive switching method done by the FCoE switch. The external volume control 112-06b of the target storage subsystem 100b connects the storage subsystems 100a and 100b (by other dedicated Ether I/F) in step 112-06-c01, associates the volumes 120a and 120b in step 112-06-c02, sets the WWPN1 on the Ether I/F 113b in step 112-06-c03, and performs FLOGI and PLOGI to the fabric (FCoE switch 400) in step 112-06-c04. The FCoE switching control 402-02 of the FCoE switch 402 sends a warning message to the administrator (see, e.g., management computer 500 in FIG. 16) after FLOGI and PLOGI in step 402-02-c01. If the administrator does not accept to change the forwarding policy in step 402-02-c02, the process ends. If the administrator accepts to change the forwarding policy, the program determines if the subject Ether I/F 113a is shared by multiple WWPN in step 402-02-c03. If yes, the program updates the FCM 402-06 in step 402-02-c05. If no, the program updates the FCM 402-06 or the conversion table 202-04 in step 202-02-a04. In step 112-02-c01, the FCoE control 112-02a of the source storage subsystem 100a performs LOGOUT from the fabric (WWPN1 of Ether I/F 113a).

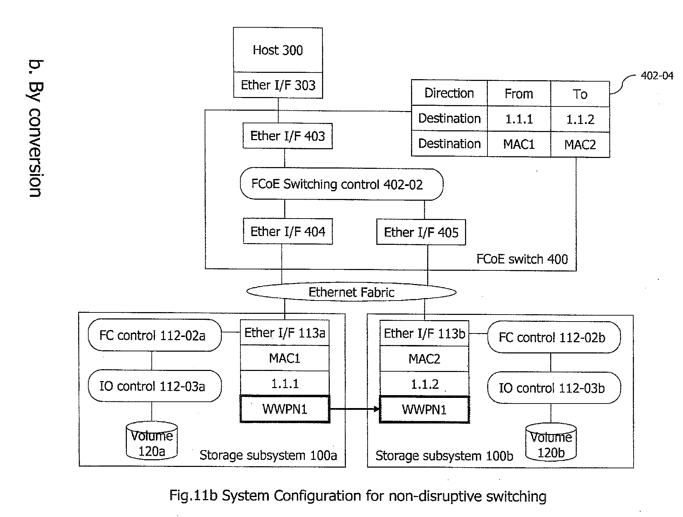

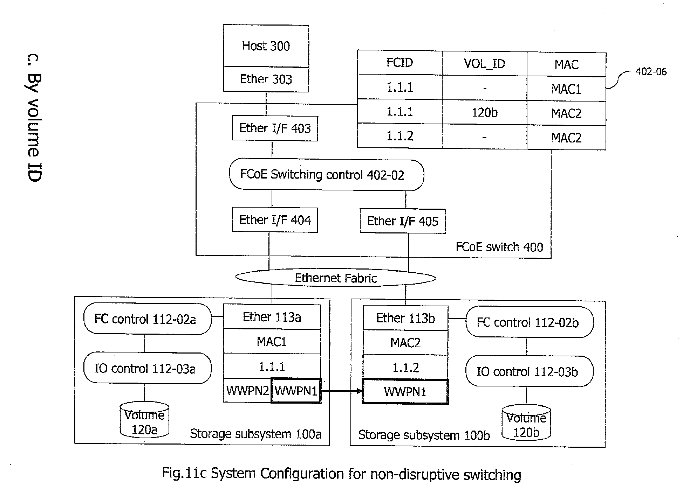

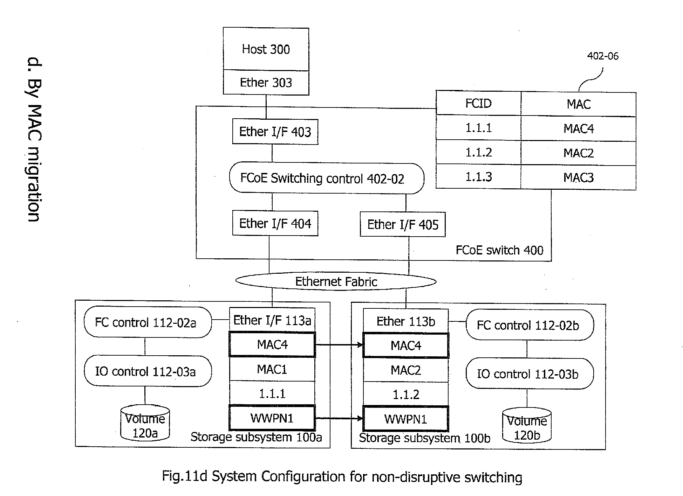

FIG. 11a shows the method of changing FCM 402-06 to switch. Before switching, FCoE frame to "1.1.1" / "MAC1" is forwarded to Ether I/F 404 to reach Ether I/F 113a (of source storage subsystem 100a) which owns FCID "1.1.1" / "MAC1". Thus, changing mapping of FCID "1.1.1" from "MAC1" to "MAC2" in the FCM 402-06 allows the FCoE switching control 402-02 to forward the FCoE frame going "1.1.1" toward the Ether I/F 113b (of target storage subsystem 100b) which has MAC address "MAC2." FIG. 11b shows another method of changing the FCoE frame destination address from "1.1.1" to "1.1.2," from "MAC1" to "MAC2" by referring to the conversion table 402-04. FIG. 11c shows another method of switching FCoE frame by FCID and VOL_ID (volume identification information can be embedded in FCoE frame option field, for instance). FIG. 11d shows another method of switching the FCoE frame by virtual MAC address migration.

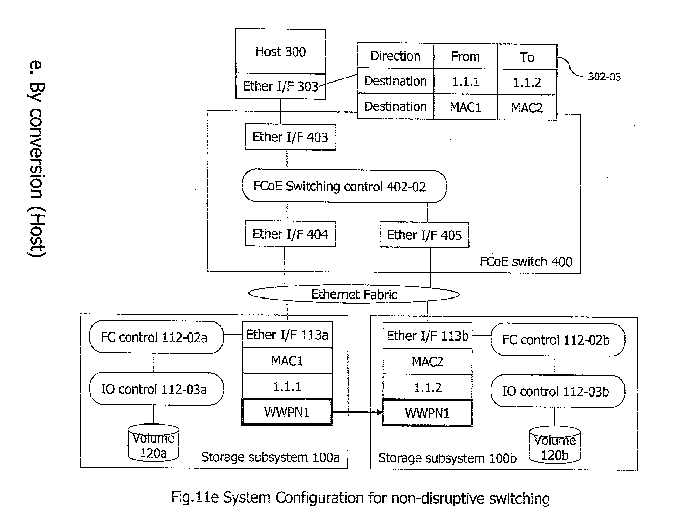

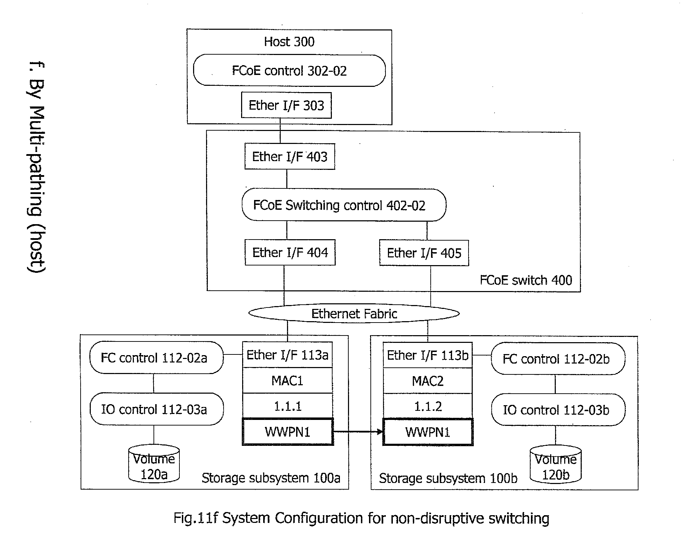

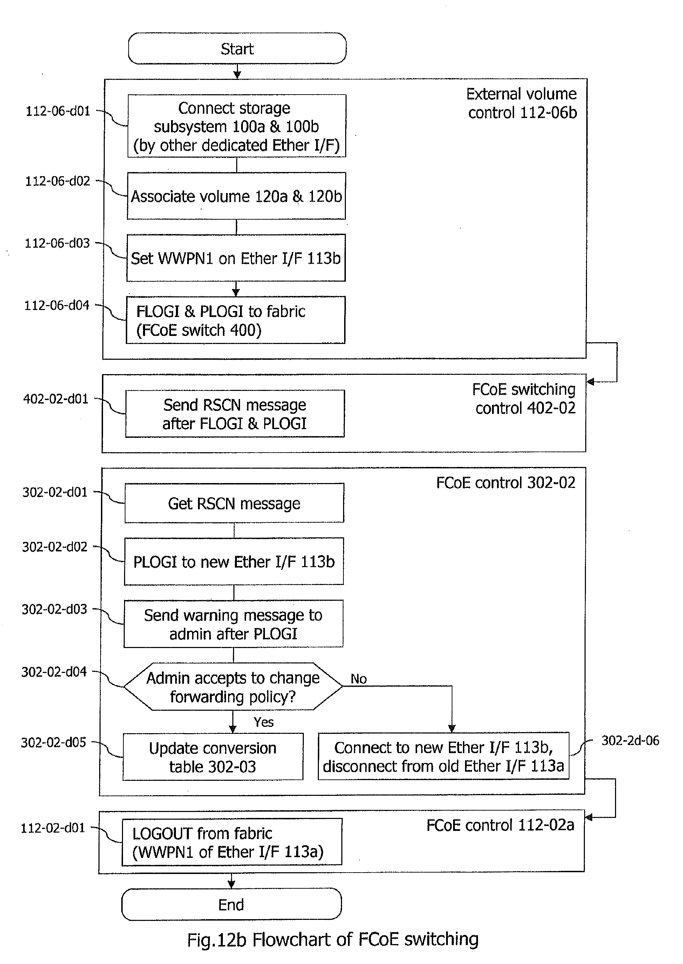

FIGS. 11e and 11f show examples of non-disruptive path switching method done by the host 300. FIG. 12b shows an example of a flow diagram of the non-disruptive switching method done by the host 300. The external volume control 112-06b of the target storage subsystem 100b connects the storage subsystems 100a and 100b (by other dedicated Ether I/F) in step 112-06-d01, associates the volumes 120a and 120b in step 112-06-d02, sets the WWPN1 on the Ether I/F 113b in step 112-06-d03, and performs FLOGI and PLOGI to the fabric (FCoE switch 400) in step 112-06-d04. The FCoE switching control 402-02 of the FCoE switch 400 sends an RSCN message after FLOGI and PLOGI in step 202-02-b01. The FCoE control 302-02 of the host 300 gets the FSCN message in step 302-02-d01, performs PLOGI to the new Ether I/F 113b in step 302-02-d02, and sends a warning message to the administrator after PLOGI in step 302-02-d03. If the administrator accepts to change the forwarding policy in step 302-02-d04, the program updates the conversion table 302-03 in step 302-02-d05. If the administrator does not accept to change the forwarding policy, the program connects to the new Ether I/F 113b and disconnects from the old Ether I/F 113a in step 302-02-d06. In step 112-02-d01, the FCoE control 112-02a of the source storage subsystem 100a performs LOGOUT from the fabric (WWPN of Ether I/F 113a).

The method of FIG. 11e is similar to that of FIG. 11b. The host 300 has the conversion table 302-03 to change the FCoE frame destination address from "1.1.1" to "1.1.2," from "MAC1" to "MAC2." FIG. 11f shows another method by utilizing multi-pathing software. The FCE control 302-02 connects not only volume 120a (of source storage subsystem 100a) but also volume 120b (of target storage subsystem 100b) by using the same WWPN, different FCID, and different MAC address. Enrolling new WWPN lets the FCoE switch 400 send the RSCN message to every node within same zone including the host 300; it allows the host 300 to know that topology change happened. After getting the RSCN, the FCoE control 302-02 changes the FCoE frame destination from volume 120a (source) to volume 120b (target) by connecting to the target Ether I/F 113b and volume 120b and disconnecting from the source Ether I/F 113a and volume 120a.

Before changing the FCM, the target storage subsystem 100b needs to connect to the source storage subsystem 100a to virtualize volume 120a on the source storage subsystem 100a as volume 120b on the target storage subsystem 100b (volume 120b represents volume 120a, host 300 sends SCSI command to volume 120b, it will be reflected to volume 120a by External volume control 112-06 (e.g., Hitachi Universal Volume Manager)).

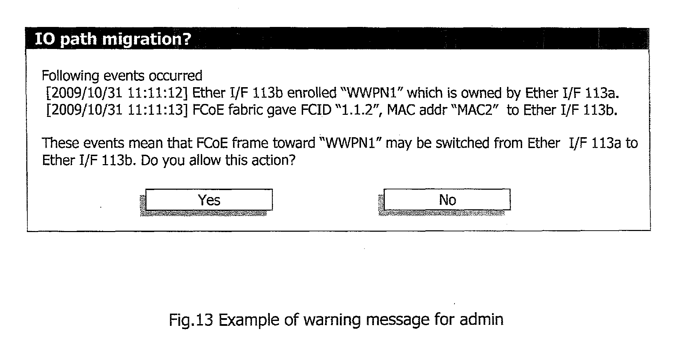

For security reasons, it allows the administrator to determine whether FCoE frame switching will be allowed or not. Enrolling the same WWPN by the Ether I/F 113b lets the system know that FCoE frame switching may occur from Ether I/F 113a to Ether I/F 113b. At this time, the FCoE switch 400 shows the warning message to the administrator as seen in FIG. 13. If the administrator says yes, the FCoE frame switching process will proceed.

3. Switching Unit

This invention provides two sorts of switching unit. One is Sequence/Exchange base; another is FC/FCoE Frame base.

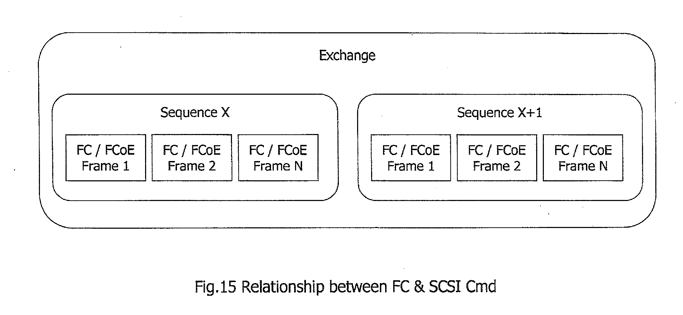

FIG. 15 shows the structure of FC/FCoE Frame and SCSI command. A Sequence has one or more FC/FCoE frames; a Sequence represents a single SCSI command. An Exchange has one or more Sequences; an Exchange represents plural SCSI commands.

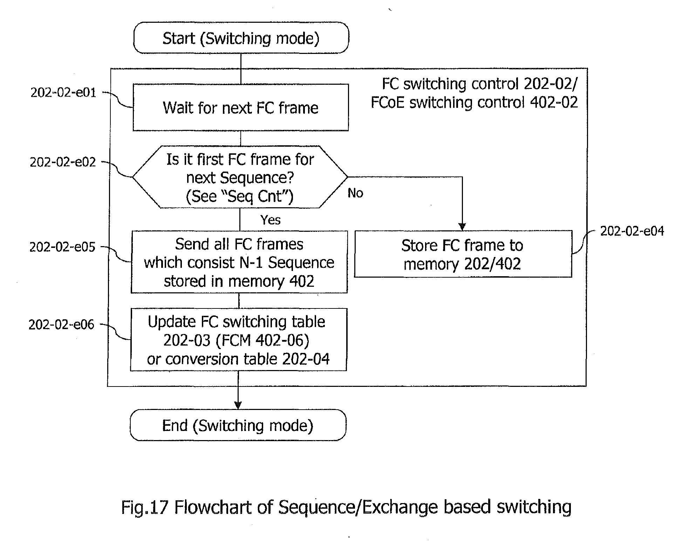

FIG. 16a shows an example of Sequence/Exchange based switching, as indicated by the Sequence/Exchange X to the source storage subsystem 100a and the Sequence/Exchange X+1 to the target storage subsystem 100b. A management computer or server 500 has a CPU, a memory, and interfaces to connect with the host computer 300, the SAN switch 200 or FCoE switch 400, and the storage subsystems 100. FIG. 17 shows an example of a flow diagram illustrating Sequence/Exchange based switching. The SAN switch 200/FCoE switch 400 will switch the FC/FCoE frame from the source storage subsystem 100a to the target storage subsystem 100b by the Sequence/Exchange unit. The FC switching control 202-02 or FCoE switching control 402-02 performs the following steps from the start of the switching mode to the end of the switching mode. In step 202-02-e01, it waits for the next FC frame. In step 202-02-e02, it determines whether the FC frame is the first FC frame for the next Sequence. If yes, it sends all FC frames which consist of N-1 Sequence stored in the memory 402 in step 202-02-e05, and updates the FC switching table 202-03 (FCM 402-06) or the conversion table 202-04 in step 202-02-e06. If no, it stores the FC frame to the memory 202/402 in step 202-02-e04.

In FIG. 17, the FC frame has Sequence ID and Exchange ID which represents Sequence/Exchange identification. Plural FC/FCoE frames which have the same Sequence/Exchange ID will be sent to the same node. Once the SAN switch 200/FCoE switch 400 enters "switching mode," it stores one or more FC frames to the memory 202/402 (202-02-e04). If the SAN switch 200/FCoE switch 400 detects a new Sequence by checking the Sequence ID, the SAN switch 200/FCoE switch 400 sends the stored one or more FC frames (N-1 Sequence) by using the current switching table (202-02-e05). After sending, the SAN switch 200/FCoE switch 400 updates the switching table (202-02-e06).

FIG. 16b shows an example of FC/FCoE frame switching. The SAN switch 200/FCoE switch 400 will switch the FC/FCoE frame from the source storage subsystem 100a to the target storage subsystem 100b by the FC/FCoE frame unit. In this case, the Sequence/Exchange ID will be ignored. In order to compose the Sequence by the target storage subsystem 100b, this invention provides multiple options as follows.

(a) Every FC frame which cannot be used to re-compose Sequence (Sequence count in FC frame lets the target storage subsystem 100b know the lack of FC frame) will be disposed. The target storage subsystem 100b waits for SCSI re-transmission by the host 300.

(b) Before switching happens, the target storage subsystem 100b acts as the FC/FCoE switch. Normally, the storage subsystem has cache memory to store I/O data temporarily for better performance. However, it creates dirty data which is not stored on disk. If the host 300 sends the SCSI command to the source storage subsystem 100a for reading a specific block address which is also stored on only the cache memory of the target storage subsystem 100b after switching, the host 300 cannot read the newest data. Turning the cache memory off prevents this problem. After the switching is done, the target storage subsystem 100b should be allowed to turn on the cache memory.

4. Multi-pathing, Inter-device switching

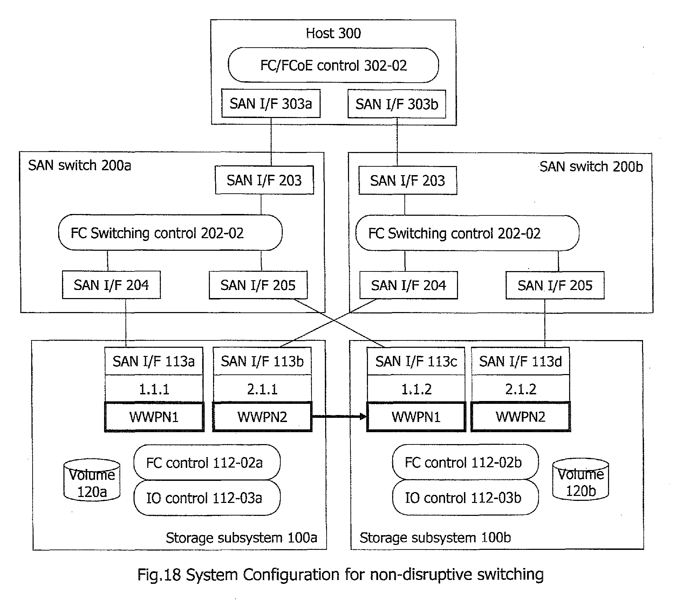

FIG. 18 shows an example of a system configuration for non-disruptive switching in multi-pathing environment (WWPN1 from the SAN I/F 113a to the SAN I/F 113c, and WWPN2 from SAN I/F 113b to the SAN I/F 113d). This invention allows non-disruptive switching not only in the single path case but also the multi-pathing case. If the host 300 has plural I/O paths to the source storage subsystem 100a, switching can be done by each path.

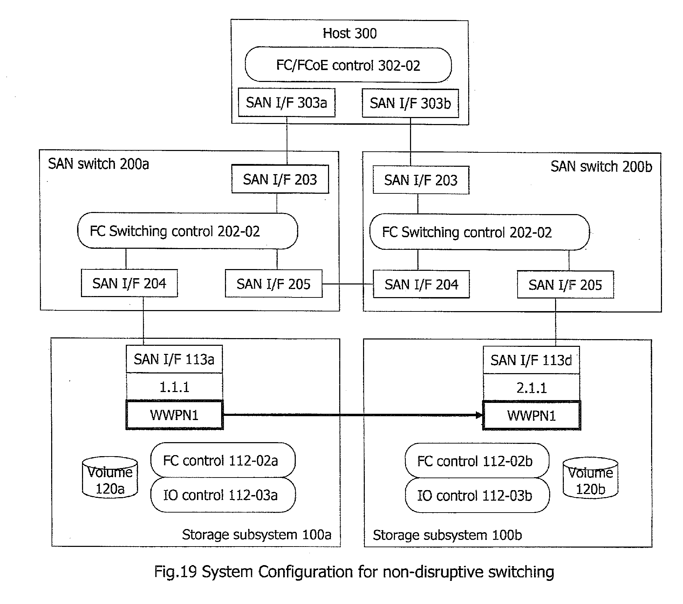

FIG. 19 shows an example of a system configuration for non-disruptive switching in an inter-switching environment (from the SAN switch 200a to the SAN switch 200b). Even if the storage subsystems 100a and 100b connect to different FC/FCoE switches, these switching methods provide non-disruptive switching from old storage subsystem 100a to new storage subsystem 100b.

Of course, the system configurations illustrated in FIGS. 1, 5, 9, 11, 16, 18, and 19 are purely exemplary of information systems in which the present invention may be implemented, and the invention is not limited to a particular hardware configuration. The computers and storage systems implementing the invention can also have known I/O devices (e.g., CD and DVD drives, floppy disk drives, hard drives, etc.) which can store and read the modules, programs and data structures used to implement the above-described invention. These modules, programs and data structures can be encoded on such computer-readable media. For example, the data structures of the invention can be stored on computer-readable media independently of one or more computer-readable media on which reside the programs used in the invention. The components of the system can be interconnected by any form or medium of digital data communication, e.g., a communication network. Examples of communication networks include local area networks, wide area networks, e.g., the Internet, wireless networks, storage area networks, and the like.

In the description, numerous details are set forth for purposes of explanation in order to provide a thorough understanding of the present invention. However, it will be apparent to one skilled in the art that not all of these specific details are required in order to practice the present invention. It is also noted that the invention may be described as a process, which is usually depicted as a flowchart, a flow diagram, a structure diagram, or a block diagram. Although a flowchart may describe the operations as a sequential process, many of the operations can be performed in parallel or concurrently. In addition, the order of the operations may be re-arranged.

As is known in the art, the operations described above can be performed by hardware, software, or some combination of software and hardware. Various aspects of embodiments of the invention may be implemented using circuits and logic devices (hardware), while other aspects may be implemented using instructions stored on a machine-readable medium (software), which if executed by a processor, would cause the processor to perform a method to carry out embodiments of the invention. Furthermore, some embodiments of the invention may be performed solely in hardware, whereas other embodiments may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

From the foregoing, it will be apparent that the invention provides methods, apparatuses and programs stored on computer readable media for I/O path switching in a storage area network using FC and FCoE. Additionally, while specific embodiments have been illustrated and described in this specification, those of ordinary skill in the art appreciate that any arrangement that is calculated to achieve the same purpose may be substituted for the specific embodiments disclosed. This disclosure is intended to cover any and all adaptations or variations of the present invention, and it is to be understood that the terms used in the following claims should not be construed to limit the invention to the specific embodiments disclosed in the specification. Rather, the scope of the invention is to be determined entirely by the following claims, which are to be construed in accordance with the established doctrines of claim interpretation, along with the full range of equivalents to which such claims are entitled.

## Claims

1. A system for input/output (I/O) path switching, the system comprising:
a host;
a network switch coupled to the host, the network switch having a processor, a memory, and network switch interfaces; and
a plurality of storage systems which include a first storage system and a second storage system; the first storage system having a first storage system network interface coupled to the network switch, and one or more first storage volumes; the second storage system having a second storage system network interface coupled to the network switch, and one or more second storage volumes;
wherein, for switching an I/O path, from a path between the host and the first storage system via the network switch to another path between the host and the second storage system via the network switch, one of the host or the network switch changes FCID (Fibre Channel Node port identifier) information therein, to migrate a WWPN (World Wide Port Name) from association with the first storage system network interface to association with the second storage system network interface; and
wherein the FCID information includes address information of storage system network interfaces of the storage systems for connecting to the network switch.

2. The system according to claim 1,
wherein during the I/O path switching, one or more I/O operations associated with one or more I/O commands from the host are performed within the system.

3. The system according to claim 1, further comprising:
a management computer coupled to the host, the network switch, and the storage systems;
wherein, in response to a command from the management computer to the network switch, a physical network interface identifier is changed for a FCID associated with the I/O path switching to the second storage system based on the change of the FCID information.

4. The system according to claim 1, further comprising:
a management computer coupled to the host, the network switch, and the storage systems;
wherein based on the change of the FCID information, the second storage system sends a command to the network switch to update I/O path switching information and the network switch sends a notice to the management computer regarding the update to the I/O path switching information.

5. A system for input/output (I/O) path switching, the system comprising:
a host;
a network switch coupled to the host, the network switch having a processor, a memory, and network switch interfaces; and
a plurality of ports which include a first port and a second port; the first port coupled to a plurality of first storage volumes via a first controller and having a first network interface coupled to the network switch; the second port coupled to a plurality of second storage volumes via a second controller and having a second network interface coupled to the network switch;
wherein the network switch, in response to a command authorizing the I/O path switching from a path between the host and the first port to another path between the host and the second port, changes FCID (Fibre Channel Node port identifier) information therein, to migrate a WWPN (World Wide Port Name) from association with the first network interface to association with the second network interface, a subsequent frame not sent to the first port to be sent to the second port after the change of FCID; and
wherein the FCID information includes address information of network interfaces of the first and second ports for connecting to the network switch.

6. The system according to claim 5, further comprising:
a management computer coupled to the host, the network switch, and the first and second controllers;
wherein the command is issued by the management computer,
wherein the management computer sends a notice to the first and second controllers when the command is issued.

7. The system according to claim 6,
wherein in response to the notice sent from the management computer, the second storage system turns on a cache memory which was off before the network switch changes FCID.

8. The system according to claim 6,
wherein the network switch, under control of the command, changes the transfer processing unit from frame to sequence; and
wherein the network switch checks if all frames within a sequence are received or not; and
wherein, if all frames within the sequence are not received, the network switch waits until all frames within the sequence are received before changing the transfer processing unit from frame to sequence.

9. The system according to claim 8,
wherein the management computer sends the notice to the first and second storage systems after the transfer processing unit is changed from frame to sequence.

10. The system according to claim 6,
wherein the first port, the first controller, and first storage volumes are included in a first storage system, and
wherein the second port, the second controller, and second storage volumes are included in a second storage system different from the first storage system.

11. A system for input/output (I/O) path switching, the system comprising:
a host;
a network switch coupled to the host, the network switch having a processor, a memory, and network switch interfaces; and
a plurality of storage systems which include a first storage system and a second storage system; the first storage system having a first storage system network interface coupled to the network switch, and one or more first storage volumes; the second storage system having a second storage system network interface coupled to the network switch, and one or more second storage volumes;
wherein the network switch, in response to a command authorizing the I/O path switching from a path between the host and the first storage system to another path between the host and the second storage system, changes FCID (Fibre Channel Node port identifier) information therein, to migrate a WWPN (World Wide Port Name) from association with the first network interface to association with the second network interface, a subsequent sequence not sent to the first storage system to be sent to the second storage system after the change of FCID; and
wherein the FCID information includes address information of storage system network interfaces of the first and second storage systems for connecting to the network switch; and
wherein a sequence represents a single SCSI command and a sequence has one or more frames.

12. The system according to claim 11, further comprising:
a management computer coupled to the host, the network switch, and the storage systems;
wherein the command is issued by the management computer, and
wherein the management computer sends a notice to the first and second storage systems when the command is issued.

13. The system according to claim 11,
wherein in response to the notice sent from the management computer, the second storage system turns on a cache memory therein.
